# EUROPEAN PATENT SPECIFICATION

(11) **EP 2 341 102 B1**
(45) Date of publication and mention of the grant of the patent: **02.12.2015**
(21) Application number: 10196531.7
(22) Date of filing: 22.12.2010
(51) Int. Cl.: C08L 25/12, C08L 83/04, C08L 25/14, C08L 55/02

(54) **Thermoplastic resin composition revealing improved impact strength and melt flow property**
Thermoplastische Harzzusammensetzung mit verbesserter Stoßfestigkeit und Schmelzflusseigenschaft
Composition de résine thermoplastique avec propriété améliorée de résistance à l'impact et d'indice de fluidité

(30) Priority: 30.12.2009 KR 20090134973; 01.10.2010 KR 20100096046
(43) Date of publication of application: 06.07.2011
(73) Proprietor: Cheil Industries Inc., Uiwang-si, Gyeonggi-do (KR)
(72) Inventor: Chung, Jin Hwa, Uiwang-si, Gyeonggi-do (KR); Kwon, Kee Hae, Uiwang-si, Gyeonggi-do (KR); Koo, Ja Kwan, Uiwang-si, Gyeonggi-do (KR); Kim, Il Jin, Uiwang-si, Gyeonggi-do (KR)
(74) Representative: Lang, Johannes

(56) References cited:
- EP-A1- 2 407 511
- EP-A2- 0 590 969
- EP-A2- 0 728 809
- JP-A- 61 136 510

## Description

The present invention relates to a styrenic thermoplastic resin composition.

Thermoplastic resin has lower specific gravity than that of glass or metal, and also has excellent physical properties such as compactibility and impact resistance and the like. Recently as electronic goods become bigger, lightweight and follow low price trends, plastic goods are rapidly replacing domains of existing glass or metal such that the domains are broadening from electronic components to automobile parts. Accordingly, function and appearance of exterior materials are becoming important and a demand of external stimulation and workability is increasing.

Acrylonitrile-butadiene-styrene copolymer (ABS) resins are prepared by dispersing a graft ABS copolymer (g-ABS) resin into a matrix polymer of a styreneacrylonitrile copolymer (SAN) resin. The graft ABS copolymer (g-ABS) is a copolymer in which aromatic vinyl compounds (such as styrene monomers) and unsaturated nitrile-based compounds (such as acrylonitrile monomers) are grafted to a butadiene-based rubber polymer as central or a core portion. Such ABS resins have excellent properties, such as workability, impact resistance, heat resistance, chemical resistance, mechanical strength, melt strength and the like, and also have excellent coloring properties and gloss. Accordingly, ABS resins are widely used in various electric, electronic and miscellaneous components requiring esthetically pleasing external appearance.

However, ABS resins should also have resistance against strong chemicals such as acetic acid and industrial oils without cracking while maintaining excellent impact resistance when used in interior and exterior materials of electric and electronic appliances such as mixers, washing machines, electric fans, and the like. Such materials are subject to repetitive stress due to the driving force of motors. Accordingly, such interior and exterior materials should be able to withstand repetitive stress for a predetermined length of time or longer without cracking or breaking.

Recently as the trend for housing of electronic parts change, there are increasing demands for a variety of special complex properties. In particular, as high impact strength, flow property and coloring become important, due to a strategic approach of making electric parts thinner and more luxurious, demands for ABS resin having excellent impact resistance and flowability are increasing.

For the purpose of improving the impact resistance of an ABS resin, a SAN resin in an ABS resin can be used to reinforce the impact resistance by increasing the molecular weight of a SAN resin or rubber content conventionally, leading to an improvement of impact resistance while failing to improve flowability and heat resistance.

EP 0 590 969 A2 discloses thermoplastic molding compositions comprising a blend of a polycarbonate resin, an acrylonitrile-butadiene-styrene graft polymer and an epoxy functional silicone. These blends have reduced gloss and improved low temperature impact strength. EP 0 728 809 A2 discloses a thermoplastic resin composition comprising (A) a thermoplastic resin selected from a copolymer of an aromatic vinyl compound and an unsaturated aliphatic nitrile compound, a copolymer of an aromatic vinyl compound, an unsaturated aliphatic nitrile compound, and a diene-type rubbery polymer, or mixtures of the preceding copolymers; (B) a polyorganosiloxane; and (C) a copolymer selected from a copolymer of an organosiloxane compound and an ester of a vinylcarboxylic acid or a copolymer of a vinyl compound, an unsaturated aliphatic nitrile compound and an organosiloxane compound.

Thus, it is the object of the present invention to overcome such problems in the prior art. Above object has been achieved by the provision of a styrenic thermoplastic resin composition in which the blend of both styrenic copolymer resin and rubber modified vinyl graft resin further includes a branched styrenic copolymer resin prepared by including silicon based compound, to improve impact strength and melt flow property of the resin.

Further, the present invention provides plastic articles using the above resin composition.

The present invention provides a styrene based thermoplastic resin composition comprising (A) 10 to 99 % by weight of a thermoplastic resin including one or more selected from the group consisting of (a1) styrenic copolymer resin and (a2) rubber-modified vinyl graft copolymer; and (B) 1 to 90 % by weight of a branched styrenic copolymer resin prepared by including silicon based compound, wherein the branched styrenic copolymer resin prepared by including silicon based compound (B) is a copolymer or a combination thereof prepared by copolymerizing (b1) 10 to 85% by weight of an aromatic vinyl based monomer; (b2) 10 to 85 % by weight of an unsaturated nitrile based monomer; (b3) 1 to 50 % by weight of a (meth)acrylic monomer; and (b4) 0.1 to 20 % by weight of a silicon based compound having two or more unsaturated functional groups.

In exemplary embodiments of the invention the branched styrenic copolymer resin prepared by including silicon based compound (B) has weight an average molecular weight of 50,000 to 5,000,000.

The styrenic thermoplastic resin composition can further include additives selected from the group consisting of surfactants, nucleating agents, coupling agents, fillers, plasticizers, impact modifiers, lubricants, antimicrobial agents, parting agents, heat stabilizers, antioxidants, light stabilizers, compatibilizers, inorganic fillers, dyes, stabilizers, antistatic agents, pigments, flame proofing agents and mixtures thereof.

The present invention can include the pellets extruding the above styrenic thermoplastic resin composition, and plastic articles molding them.

In exemplary embodiments of the invention the styrenic thermoplastic resin composition can alloy other resins, for example, without limitation one or two more resin compositions selected from the group consisting of polycarbonate(PC), polymethylmethacrylate(PMMA), polyolefin, polyphenyleneether(PPE), polyethyleneterephthalate(PET), polyamide, polyimide and mixtures thereof.

Further, the present invention provides the alloyed styrenic thermoplastic resin composition as above.

The present invention will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

The present invention provides a styrene based thermoplastic resin composition comprising 10 to 99 % by weight of a thermoplastic resin including one or more selected from the group consisting of (a1) styrenic copolymer resin and (a2) rubber-modified vinyl graft copolymer; and (B) 1 to 90 % by weight of a branched styrenic copolymer resin prepared by including silicon based compound, wherein the branched styrenic copolymer resin prepared by including silicon based compound (B) is a copolymer or a combination thereof prepared by copolymerizing (b1) 10 to 85 % by weight of an aromatic vinyl based monomer; (b2) 10 to 85 % by weight of an unsaturated nitrile based monomer; (b3) 1 to 50 % by weight of a (meth)acrylic monomer; and (b4) 0.1 to 20 % by weight of a silicon based compound having two or more unsaturated functional groups.

A styrenic thermoplastic resin composition of the invention comprises a blend of both styrenic copolymer resin and rubber modified vinyl graft resin, and a branched styrenic copolymer resin prepared by including silicon based compound, to improve impact strength and melt flow property of the resin at the same time. Specifically, as applying a branched styrenic copolymer resin prepared by including silicon based compound, a styrenic thermoplastic resin composition of the present invention can have excellent impact strength, and improved melt flow property by branched structure and, therefore it have good molding property.

### (a1) Styrenic copolymer resin

The styrenic copolymer resin of the present invention can be prepared by a known method for copolymerizing 50 to 95% by weight of aromatic vinyl compound or combinations thereof, and 5 to 50% by weight of unsaturated nitrile compound, (meth)acrylic acid alkyl ester, maleic anhydride, maleimide based compound or combinations thereof. The above method is known in the art and is one of emulsion polymerization, suspension polymerization, solution polymerization or bulk polymerization.

Examples of the aromatic vinyl compound may include without limitation styrene, α -methylstyrene, p-methylstyrene, vinyl toluene, 2,4-dimethylstyrene, halogene or alkyl substituted styrene. Styrene is most preferred.

Examples of the unsaturated nitrile compound may include without limitation acrylonitrile, or methacrylonitrile.

Examples of (meth)acrylic acid alkyl esters may include without limitation C1-8 methacrylic acid alkyl esters or, C1-8 acrylic acid alkyl esters. The C1-8 methacrylic acid alkyl esters or the C1-8 acrylic acid alkyl esters respectively are esters of methacrylic acid or acrylic acid, which are obtained from monohydril alcohols having carbon atoms of 1 to 8. In exemplary embodiments of the invention these may include without limitation methacrylic acid methyl esters, methacrylic acid ethyl esters, acrylic acid ethyl esters, acrylic acid methyl esters or methacrylic acid propyl esters.

Examples of the maleimide based compound may include without limitation C1-4 alkyl or phenyl N-substituted maleimide.

In an exemplary embodiment of the invention the styrenic copolymer(a1) is a styrenic copolymer or combinations thereof, which is prepared by copolymerizing 50 to 95% by weight of styrene, α-methylstyrene, halogen or alkyl substituted styrene or combinations thereof; and 5 to 50% by weight of acrylonitrile, methacrylonitrile, C1-8 acrylic acid alkyl esters, maleic anhydride, C1-4 alkyl or phenyl nucleus substituted maleimide or combinations thereof.

Examples of styrenic copolymer(a1) preferably may be prepared from styrene and acrylonitrile, optionally monomer mixture of methacrylic acid methyl esters; α -methylstyrene and acrylonitrile, optionally monomer mixture of methacrylic acid methyl esters; or styrene, α-methylstyrene and acrylonitrile, optionally monomer mixture of methacrylic acid methyl esters.

The styrenic copolymer(a1) preferably has weight an average molecular weight of 15,000 to 250,000.

In another exemplary embodiment styrene copolymer is preferably a copolymer consisting of styrene and maleic anhydride, which can be prepared by continuous bulk polymerization process or solution polymerization process. Ratio of styrene and maleic anhydride can be changed on a broad scope, especially the amount of maleic anhydride is 5 to 50 % by weight. Furthermore, styrene/maleic anhydride copolymer may have a weight average molecular weight on a broad scope, in particular the weight average molecular weight is preferably 15,000 to 250,000.

In another exemplary embodiment, while rubbery-modified vinyl based graft copolymer(a2) as described below is prepared, the styrenic copolymer(a1) may be produced as a by-product. In particular, this occurs more frequently when grafting a small amount of rubbery polymer with an excess of monomer mixture or when using an excess of chain transfer agent as a molecular weight control agent. An amount of the styrenic copolymer used in preparing resin composition of the present invention does not represent including a by-product of graft copolymer

### (a2) Rubber-modified vinyl graft copolymer

Rubber-modified vinyl graft copolymer(a2)is prepared by graft-polymerizing 5 to 95% by weight of rubbery polymer and 5 to 95% by weight of vinyl based monomer mixture. The rubber modified vinyl based graft copolymer(a2)can be prepared by methods, which is well known to the skilled artisan in the art, such as emulsion polymerization, suspension polymerization, bulk polymerization, and solution polymerization.The vinyl based monomer mixture includes about 50 to 95% by weight of aromatic vinyl compound, (meth)acrylic acid alkyl esters or combinations thereof and 5 to 50% by weight of unsaturated nitrile compound, (meth)acrylic acid alkyl esters, maleimide compound or combinations thereof.

It is preferred that the vinyl based monomer mixture includes 60 to 90%by weight of aromatic vinyl compound, (meth)acrylic acid alkyl esters or combinations thereof and 10 to 40% by weight of unsaturated nitrile compound, (meth)acrylic acid alkyl esters, maleimide compound or combinations thereof.

The aromatic vinyl based compound includes without limitation styrene, α -methylstyrene, p-methylstyrene, vinyltoluene, 2,4-dimethylstyrene,halogene or alkyl substituted styrene.

The above (meth)acrylic acid alkyl esters may include C1-8 methacrylic acid alkyl esters,C1-8 acrylic acid alkyl esters. The C1-8 methacrylic acid alkyl esters or C1-8acrylic acid alkyl esters may be respectively alkyl esters of methacrylic acid or acrylic acid and may be esters produced from monohydril alcohol including carbon atoms of 1 to 8. In an exemplary embodiment it includes without limitation methacrylic acid methyl esters, methacrylic acid ethyl esters, acrylic acid ethyl esters, acrylic acid methyl esters or methacrylic acid propyl esters.

The unsaturated nitrile compound may include without limitation acrylonitrile, or methacrylonitrile.

The maleimide compound may include without limitation C1-4 alkyl or phenyl N-substituted maleimide.

Examples of the rubbery polymers may include without limitation butadiene rubbers,acrylic rubbers, ethylene/propylene rubbers, styrene-butadiene, acrylonitrile/butadiene rubbers, isoprene rubbers, ethylene-propylene-diene monomer (EPDM) or, polyorganosiloxane/polyalkyl(meth)acrylate rubbers complex.

The average size of the rubber particles can range from 0.05 to 4 µm taking into account the desired impact strength and appearance of the resin composition.

In one exemplary embodiment the rubber-modified vinyl graft copolymer(a2) may be prepared by graft-polymerizing 5 to 95% by weight of monomer mixture, which comprises 50 to 95% by weight of styrene, α-methyl styrene, halogen or alkyl substituted styrene, C1-8 methacrylic acid alkyl esters, C1-8 acrylic acid alkyl esters or combinations thereof and 5 to 50% by weight of acrylonitrile, methacrylonitrile, C1-8 methacrylic acid alkyl esters, C1-8 acrylic acid alkyl esters, maleic anhydride, C1-4 alkyl or phenyl N-substituted maleimide or combinations thereof, to 5 to 95% by weight of one or combinations thereof selected from the group consisting of butadiene rubbers, acrylic rubbers, ethylene/propylene rubbers, styrene-butadiene, acrylonitrile/butadiene rubbers, isoprene rubbers, ethylene-propylene-diene monomer (EPDM), or polyorganosiloxane/polyalkyl(meth)acrylate rubbers complex.

The examples of the rubber-modified vinyl graft copolymer (a2) may be copolymer prepared by graft-copolymerizing butadiene rubbers, acrylic rubbers or styrene-butadiene rubber with a mixture including styrene, acrylonitrile and optionally (meth)acrylic acid alkyl ester monomer.

Other examples of the rubber-modified vinyl graft copolymer (a2) may be copolymer prepared by graft-copolymerizing butadiene rubbers, acrylic rubbers or styrene-butadiene rubber with (meth)acrylic acid methyl ester monomer.

It is most preferred that the rubber-modified vinyl graft copolymer (a2) is ABS graft copolymer.

### (B) Branched styrenic copolymer resin prepared by including silicon based compound

The branched styrenic copolymer resin prepared by including silicon based compound (B) of the present invention is copolymer comprising aromatic vinyl based monomer (b1), unsaturated nitrile based monomer (b2), (meth)acrylic monomer (b3) and silicon based compound having two or more unsaturated functional groups (b4). An amount of the branched styrenic copolymer resin prepared by including silicon based compound (B) is comprised of 10 to 85 % by weight of an aromatic vinyl based monomer (b1), 10 to 85 % by weight of an unsaturated nitrile based monomer (b2), 1 to 50 % by weight of a (meth)acrylic monomer(b3), and 0.1 to 20 % by weight of a silicon based compound having two or more unsaturated functional groups (b4).

It is preferred that the weight average molecular weight of the branched styrenic copolymer resin prepared by including silicon based compound(B) is 5,000 to 5,000,000.

Examples of the aromatic vinyl based monomer (b1) are one selected from the group consisting of styrene, p-methylstyrene, α-methylstyrene, halogen, alkyl substituted styrene, acrylronitrile, methacrylronitrile, maleic anhydride, C1-4 alkyl, and phenyl nucleus substituted maleimide, and a mixture thereof.

Examples of the unsaturated nitrile based monomer (b2) are one selected from the group consisting of without limitation acrylronitrile, methacrylronitrile, and a mixture thereof.

The (meth)acrylic monomer (b3) may be an aromatic or aliphatic methacrylate having a structure represented by Fomula 1 or 2 as below and a combination of (meth)acrylic monomers copolymerizable with an aromatic or aliphatic methacrylate having a structure represented by Fomula 1 or 2 as below.

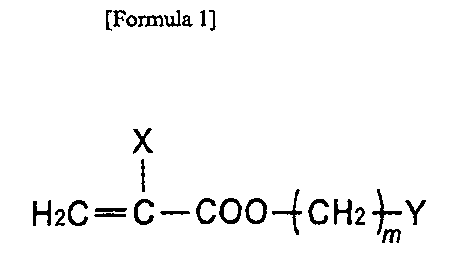

Wherein m is an integer from 0∼20, X is hydrogen or methyl group, Y is one selected from the group consisting of methyl group, cyclohexyl group, phenyl group, benzyl group, methylphenyl group, methylethylphenyl group, methoxyphenyl group, cyclohexylphenyl group, chlorophenyl group, bromophenyl group, phenylphenyl group, benzyl phenyl group.

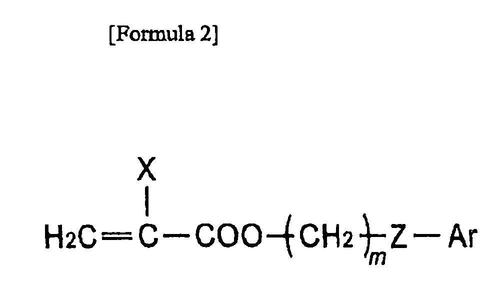

Wherein m is an integer from 0∼20, X is hydrogen or methyl group, Z is oxygen (O) or sulfur (S), Ar is one selected from the group consisting of methyl group, cyclohexyl group, phenyl group, methylphenyl group, methylethylphenyl group, methoxyphenyl group, cyclohexylphenyl group, chlorophenyl group, bromophenyl group, phenylphenyl group, benzyl phenyl group.

The (meth)acrylic monomer(b3) may include methacrylic acid esters, acrylic acid esters, unsaturated carboxylic acid, acid anhydride, esters containing hydroxy group , and combinations thereof. Examples of (meth)acrylic monomer may include without limitation methacrylic acid esters including methylmethacrylate, ethylmethacrylate, propyl methacrylate, butylmethacrylate, hexylmethacrylate, 2-ethylhexylmethacrylateand benzylmethacrylate; acrylic esters including methylacrylate, ethylacrylate, propyl acrylate, butylacrylate, hexylacrylate, 2-ethylhexylacrylate,cyclohexyl methacrylate, phenylmethacrylate, benzylmethacrylate; unsaturated carboxylic acid including acrylic acid and methacrylic acid; acid anhydride including maleic anhydride; esters containing 2-hydroxyethyl acrylate, 2-hydroxypropyl acrylate and monoglycerol acrylate, and combinations thereof.

The silicon based compound having two or more unsaturated functional groups(b4)is a solo or combination of two or more silicon based compound having two or more unsaturated functional groups in terminal or side chain, which is a structure represented by Fomula 3 as below. 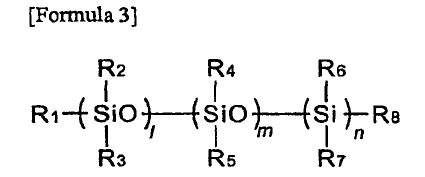 wherein 1, m and n are an integer from 0∼100, 1+m+n is not 0, R₁∼R₈ are independently or simultaneously a hydrocarbon group, vinyl group, hydroxyl group, amino group, ureido group, isocyanate group, episulfide group, epoxy group or mercapto group. At least two or more of R1∼R8 include an unsaturated functional group being capable of polymerizing and have a linear or ring-shaped structure (combination of R1 and R8).

Examples of the silicon based compound having two or more unsaturated functional groups (b4) may be selected from the group consisting of without limitation dimethoxymethylvinylsilane, diethoxymethylvinylsilane, diacetoxymethylvinylsilane, 1,1,1,3,5,5,5,-heptamethyl-3-vinyltrisiloxane, 2,4,6,8-tetramethyl tetravinylcyclotetrasiloxane, α,ω-divinylpolydimethylsiloxane, modified-vinyl dimethylsiloxane and combinations thereof.

The silicon based compound having two or more unsaturated functional groups (b4) has a viscosity of below 5,000 cPs, for example 1 to 500 cPs. Also, the vinyl content of the silicon based compound having two or more unsaturated functional groups (b4) is preferably 0.05 to 10 mmol/g.

If the vinyl content of the silicon based compound having two or more unsaturated functional groups (b4) is less than 0.05mmol/g, a branched structure exceeding the critical value cannot be formed. If the vinyl content of the silicon based compound having two or more unsaturated functional groups (b4) is more than 10mmol/g, both impact strength and flow property cannot be improved as having a lot of cross-linking structure.

An amount of the silicon based compound having two or more unsaturated functional groups (b4) is 0.1 to 10% by weight for example 0.1 to 8% by weight per total monomer mixture. If the amount of (b4) is more than 10% by weight, the flow property and workability may be deteriorated. If the amount of (b4) is less than 0.1% by weight, the improved effect of impact strength may decrease.

The weight average molecular weight of the branched styrenic copolymer resin prepared by including silicon based compound (B) is preferably 5,000 to 5000,000. The branched styrenic copolymer resin prepared by including silicon based compound (B) having above molecular weight may impart improved workability and impact strength to the thermoplastic resin as well as maintain existing properties.

In another exemplary embodiment, the branched styrenic copolymer resin prepared by including silicon based compound according to the present invention has a branched structure to improve flow property as well as include a silicon based compound to improve impact of the resin and to be capable of high molecular weight when copolymerizing.

An amount of the branched styrenic copolymer resin prepared by including silicon based compound(B) is 1 to 80% by weight, for example 5 to 50% by weight, for example 10 to 50% by weight per the total resin composition. If the amount of the branched styrenic copolymer resin prepared by including silicon based compound(B) is less than 1% by weight, impact strength and flow property cannot be improved thoroughly.

The branched styrenic copolymer resin prepared by including silicon based compound(B) may be prepared by emulsion polymerization, suspension polymerization, solution polymerization or bulk polymerization.

In an exemplary embodiment of the invention the styrenic thermoplastic resin composition further may include additives selected from the group consisting of surfactants, nucleating agents, coupling agents, fillers, plasticizers, impact modifiers, lubricants, antimicrobial agents, parting agents, heat stabilizers, antioxidants, light stabilizers, compatibilizers, inorganic fillers, dyes, stabilizers, antistatic agents, pigments, flame proofing agents and mixtures thereof.

The styrenic thermoplastic resin composition according to the present invention can be prepared by a conventional process. For example, the resin composition of the present invention may be manufactured into the form of pellets by mixing the foregoing components and optionally one or more additives and then melting and extruding the mixture in an extruder. The manufactured pellets may be manufactured into various molded articles using known molding methods, such as injection molding, extrusion molding, vacuum molding, and cast molding.

The styrenic thermoplastic resin composition of the present invention can have excellent impact resistance, formability resulting from improved compatibility, and can be colored so that it may be molded into various products. The resin composition of the invention can be particularly suitable for the production of electric or electronic exterior materials, parts, parts of car, lenses, or glass.

In one exemplary embodiment the styrenic thermoplastic resin composition can be used in the production of various production of various products including without limitation housings for electric and electronic goods such as TVs, washing machines, cassette players, MP3 players, DMB, navigation systems, cellular phones, phones, game machines, audio devices, computers, printers or, copying machines.

The manufactured pellets may be manufactured into various molded articles using known molding methods, such as injection molding, extrusion molding, vacuum molding, and casting molding, which is known to the skilled artisan in the art.

The styrenic thermoplastic resin composition of the present invention can alloy with another resin composition. In one exemplary embodiment, the alloyed styrenic thermoplastic resin composition may be prepared by alloying the styrenic thermoplastic resin composition of the present invention and one or two more resin compositions selected from the group consisting of without limitation polycarbonate(PC), polymethylmethacrylate(PMMA), polyolefin, polyphenyleneether(PPE), polyethyleneterephthalate(PET), polyamide, polyimide and mixtures thereof.

Accordingly, the present invention provides the styrenic thermoplastic resin composition, which is alloyed with one or two more resin compositions selected from the group consisting of without limitation polycarbonate(PC), polymethylmethacrylate(PMMA), polyolefin, polyphenyleneether(PPE), polyethyleneterephthalate(PET), polyamide, polyimide and mixtures thereof.

The invention may be better understood by reference to the following examples which are intended for the purpose of illustration and are not to be construed as in any way limiting the scope of the present invention, which is defined in the claims appended hereto.

### Example

The following components were used in Examples and Comparative Examples:

### (a1) Styrenic copolymer resin

The styrene-acrylonitrile(SAN) copolymer resin having an average weight molecular weight of 150,000 is used, which is prepared by suspension-polymerizing 75 parts by weight of styrene and 25 parts by weight of acrylonitrile for 5 hours at 75°C.

### (a2) Rubber-modified styrenic graft copolymer

The polybutadiene rubber latex is added as being 45 parts by weight of butadiene content per total content of monomers. Furthermore, a mixture including 39 parts by weight of styrene, 16 parts by weight of acrylonitrile and 150 parts by weight of deionized water is added. Further, 1.0 part by weight of oleic acid potassium, 0.4 parts by weight of cumenehydroperoxide and 0.3 parts by weight of t-dodecyl mercaptan chain-transfer agent as additives are added therein. After mixing, they are reacted for 5 hours at constant 75°C so that the ABS graft latex is produced. Sulfuric acid solution (1 %) is added in the produced polymer latex. Moreover, after coagulating the above polymer latex, the polymer latex is dried so that the graft copolymer resin is produced in powder form.

### (B) Branched styrenic copolymer resin is prepared by including silicon based compound

### (B1) Branched styrenic copolymer resin is prepared by including silicon based compound-1

The styrenic copolymer having an average weight molecular weight of 120,000 is used, which is prepared by suspension-polymerizing 70.5 parts by weight of styrene, 23.5 parts by weight of acrylonitrile and 5 parts by weight of butylacrylate with 1 part by weight of vinyl modified dimethylsiloxane compound which has 100cPs viscosity and contains vinyl content of 0.5mmol/g.

### (B2) Branched styrenic copolymer resin is prepared by including silicon based compound-2

The styrenic copolymer having an average weight molecular weight of 600,000 is used, which is prepared by suspension-polymerizing 67.5 parts by weight of styrene, 22.5 parts by weight of acrylonitrile and 5 parts by weight of butylacrylate with 5 parts by weight of vinyl modified dimethylsiloxane compound which has 100cPs viscosity and contains vinyl content of 0.5mmol/g.

### (B3) Branched styrenic copolymer resin is prepared by including silicon based compound-3

The styrenic copolymer having an average weight molecular weight of 1,000,000 is used, which is prepared by suspension-polymerizing 64 parts by weight of styrene, 19 parts by weight of acrylonitrile and 5 parts by weight of butylacrylate with 10 part by weight of vinyl modified dimethylsiloxane compound which has 100cPs viscosity and contains vinyl content of 0.5mmol/g.

### (B4) Branched styrenic copolymer resin is prepared by including silicon based compound-4

The styrenic copolymer having an average weight molecular weight of 120,000 is used, which is prepared by suspension-polymerizing 66.7 parts by weight of styrene, 22.3 parts by weight of acrylonitrile and 10 parts by weight of butylacrylate with a 1 part by weight of vinyl modified dimethylsiloxane compound which has 100cPs viscosity and contains vinyl content of 0.5mmol/g.

### (B5) Branched styrenic copolymer resin is prepared by including silicon based compound-5

The styrenic copolymer having an average weight molecular weight of 120,000 is used, which is prepared by suspension-polymerizing 63 parts by weight of styrene, 21 parts by weight of acrylonitrile and 15 parts by weight of butylacrylate with a 1 part by weight of vinyl modified dimethylsiloxane compound which has 100cPs viscosity and contains vinyl content of 0.5mmol/g.

### (B6) Branched styrenic copolymer resin is prepared by including silicon based compound-6

The styrenic copolymer having an average weight molecular weight of 120,000 is used, which is prepared by suspension-polymerizing 74 parts by weight of styrene and 25 parts by weight of acrylonitrile with a 1 part by weight of vinyl modified dimethylsiloxane compound which has 100cPs viscosity and contains vinyl content of 0.5mmol/g.

### (B7) Linear copolymer resin-7

The styrenic copolymer having an average weight molecular weight of 120,000 is used, which is prepared by suspension-polymerizing 75 parts by weight of styrene, 25 parts by weight of acrylonitrile and 5 parts by weight of butylacrylate.

### (B8) Branched styrenic copolymer resin is prepared by including silicon based compound-8

The styrenic copolymer having an average weight molecular weight of 250,000 is used, which is prepared by suspension-polymerizing 70.5 parts by weight of styrene, 23.5 parts by weight of acrylonitrile and 5 parts by weight of butylacrylate with a 1 part by weight of vinyl modified dimethylsiloxane compound which has 10cPs viscosity and contains vinyl content of 15mmol/g.

### Examples 1∼6 and Comparative Examples 1∼4

Each of the components is added in the amount represented in the following Table 1. The added components are uniformly mixed and melted with each other and then extruded through an extruder to prepare pellets. The used extruder is a twin-screw extruder having a diameter of 45mm and L/D=29. After drying the produced pellets at 70°C for 6 hours, the pellets are molded into test specimens using a 6-Oz injector.

The Izod impact strength (kgfcm/cm) is measured in accordance with ASTM 256 (1/8 inch, notched).

The flowability (Melt Flow Index, g/10 min) is measured in accordance with ASTM D-1238 (220°C/10kg).

The flexural modulus is measured in accordance with ASTM D790 at a specimen thickness of 1/4".

The flame retardancy of the test specimens is measured according to UL 94 VB at a specimen thickness of 1/12". The Izod impact strength (kgfcm/cm) is measured in accordance with ASTM 256 (1/8 inch, notched). The flowability (Melt Flow Index, g/10 min) is measured in accordance with ASTM D-1238 (220°C/10kg). The color development is evaluated by measuring in comparison the L-value representing the brightness through a colorimeter, after a 1 part by weight of black colorant is added to the resin and the resin is extruded.The results are shown in Tables 2.

The heat resistance, Vicot softening temperature(VST), is measured according to ASTM D1525 under the condition of 5kg.

**[Table 1]**

| | | Examples | | | | | | Comparative Examples | | | | |
|---|---|---|---|---|---|---|---|---|---|---|---|---|
| | | 1 | 2 | 3 | 4 | 5 | 6 | 1 | 2 | 3 | 4 | 5 |
| (a1) | | 41.5 | 51.5 | 41.5 | 41.5 | 41.5 | 41.5 | 71.5 | 65 | 41.5 | 41.5 | 41.5 |
| (a2) | | 28.5 | 28.5 | 28.5 | 28.5 | 28.5 | 28.5 | 28.5 | 35 | 28.5 | 28.5 | 28.5 |
| (B) | (B1) | 30 | - | - | - | - | - | - | - | - | - | - |
| | (B2) | - | 30 | 20 | - | - | - | - | - | - | - | - |
| | (B3) | - | - | - | 30 | - | - | - | - | - | - | - |
| | (B4) | - | - | - | - | 30 | - | - | - | - | - | - |
| | (B5) | - | - | - | - | - | 30 | - | - | - | - | - |
| | (B6) | - | - | - | - | - | - | - | - | 30 | - | - |
| | (B7) | - | - | - | - | - | - | - | - | - | 30 | - |
| | (B8) | - | - | - | - | - | - | - | - | - | - | 30 |
| Izod Impact strength (1/8") | | 27.8 | 32.3 | 28.0 | 26.6 | 26.1 | 22.8 | 15.6 | 33 | 16.1 | 15.0 | 11.3 |
| Flowability Index (220°C,10kg) | | 22.4 | 29.1 | 25.5 | 31.5 | 44.7 | 56.5 | 15.4 | 10.4 | 18.8 | 20.0 | 5.1 |
| Flexural | | 210 | 215 | 210 | 212 | 200 | 193 | 212 | 198 | 211 | 190 | 195 |
| modulus(MPa) | | 56 | 29 | 92 | 55 | 07 | 44 | 55 | 17 | 00 | 10 | 75 |
| VST(5kg), °C | | 97.2 | 96.3 | 97.8 | 94.6 | 89 | 84.4 | 99.2 | 98.4 | 98.0 | 96.4 | 97.5 |

If the resin of the comparative example 1 prepared by blending a styrenic copolymer resin(SAN) and a rubber-modified vinyl graft copolymer is necessary to impart high impact strength, an amount of the g-ABS of comparative example 1 is highly demanded as comparative example 2. In this case impact strength may be improved, however, flowability and physical properties rapidly deteriorate.

When the resin is prepared by blending a styrenic copolymer resin(SAN) and a rubber-modified vinyl graft copolymer, if a branched styrenic copolymer resin including silicon based compound is further added to improve both impact strength and flowability simultaneously as the examples 1-4, impact strength is improved by increased molecular weight and silicone based compounds and flowablility and compactibility are improved by branched structures at the same time.

As shown in Examples 1 and 2, if the amount of silicon compound is appropriate, excellent impact strength and flow properties will be induced and the deterioration of heat resistance and of mechanical properties should not occur as much. Further, comparing the amount of the branched styrenic copolymer resin itself in Examples 2 and 3, it is found that as the applied amount gets larger, the impact strength and flow properties improve.

Comparing Examples, 1, 2 and 4, in the composition of the applied copolymer, as the applied amount of silicon compounds gets larger, the flow properties and the impact strength of the entire resin gets augmented, however, in the case that the amount of silicon compounds exceed the appropriate amount, the flow properties are increased while the impact strength decrease. As shown in Example 4, if the amount of silicon compound becomes larger, the improvement of impact strength gets smaller than Example 2, but the flow properties increase more.

As shown in Examples 5 and 6,when a branched styrenic copolymer resin including silicon based compound is copolymerized and the amount of (meth)acryl based monomers is increased, the impact strength and the flow properties improves more and, thereby, such resin may be employed as a supra high flow property material.

As shown in comparative examples 3 and 4, when an aromatic vinyl based monomer (b1) and an unsaturated nitrile monomer(b2) is copolymerized and only a silicon based compound without (meth)acrylic monomer (comparative example 3) or a (meth)acrylic monomer (comparative example 4) is applied, the flow property is somewhat increased, without any improvement of the impact strength. Further, as shown in comparative example 5, if a silicon compound with a large amount (more than 10 mmol/g) of (meth)acrylic monomer and vinyl is applied, the improvement of flow properties and impact strength does not occur.

Many modifications and other embodiments of the invention will come to mind to one skilled in the art to which this invention pertains having the benefit of the teachings presented in the foregoing descriptions. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

## Claims

1. A styrene based thermoplastic resin composition comprising:
(A) 10 to 99 % by weight of a thermoplastic resin including (a1) styrenic copolymer resin and (a2) rubber-modified vinyl graft copolymer; and
(B) 1 to 90 % by weight of a branched styrenic copolymer resin prepared by including a silicon based compound;
wherein (B) the branched styrenic copolymer resin prepared by including a silicon based compound is a copolymer or a combination thereof prepared by copolymerizing the following:
(b1) 10 to 85 % by weight of an aromatic vinyl based monomer;
(b2) 10 to 85 % by weight of an unsaturated nitrile based monomer;
(b3) 1 to 50 % by weight of a (meth)acrylic monomer; and
(b4) 0.1 to 20 % by weight of a silicon based compound having two or more unsaturated functional groups.

2. The styrenic thermoplastic resin composition of Claim 1, wherein the weight average molecular weight of (B) the branched styrenic copolymer resin prepared by including a silicon based compound is 5,000 to 5,000,000.

3. The styrenic thermoplastic resin composition of Claim 1, wherein the aromatic vinyl based monomer (b1) is one selected from the group consisting of styrene, p-methylstyrene, α-methylstyrene, halogen, alkyl substituted styrene, acrylonitrile, methacrylonitrile, maleic anhydride, C1-4 alkyl, phenyl nucleus substituted maleimide and mixtures thereof.

4. The styrenic thermoplastic resin composition of Claim 1, wherein (b2) the unsaturated nitrile based monomer is one selected from the group consisting of acrylonitrile, methacrylonitrile, and mixtures thereof.

5. The styrenic thermoplastic resin composition of Claim 1, wherein (b3) the (meth)acrylic monomer is an aromatic or aliphatic methacrylate having a structure represented by Formula 1 or 2 as shown below and a combination of (meth)acrylic monomers copolymerizable with an aromatic or aliphatic methacrylate having a structure represented by Formula 1 or 2 as shown below: 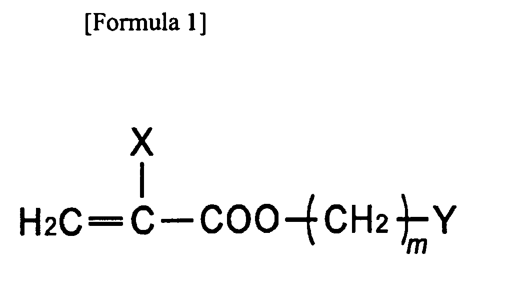 (Wherein m is an integer from 0~20, X is hydrogen or methyl group, Y is one selected from the group consisting of methyl group, cyclohexyl group, phenyl group, benzyl group, methylphenyl group, methylethylphenyl group, methoxyphenyl group, cyclohexylphenyl group, chlorophenyl group, bromophenyl group, phenylphenyl group, benzyl phenyl group.), 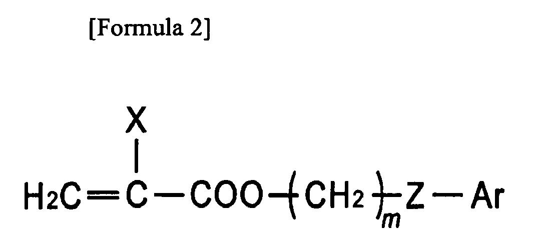 (Wherein m is an integer from 0~20, X is hydrogen or methyl group, Z is oxygen (O) or sulfur (S), Ar is one selected from the group consisting of methyl group, cyclohexyl group, phenyl group, methylphenyl group, methylethylphenyl group, methoxyphenyl group, cyclohexylphenyl group, chlorophenyl group, bromophenyl group, phenylphenyl group, benzyl phenyl group.).

6. The styrenic thermoplastic resin composition of Claim 5, wherein the aromatic or aliphatic methacrylate is one selected from the group consisting of cyclohexyl (meth)acrylate, phenoxymethacrylate, phenoxyethylmethacrylate, 2-ethylphenoxymethacrylate, 2-ethylthiophenylmethacrylate, 2-ethylaminophenylmethacrylate, phenylmethacrylate, benzylmethacrylate, 2-phenylethylmethacrylate, 3-phenylpropylmethacrylate, 4-phenylbutylmethacrylate, 2-2-methylphenylethylmethacrylate, 2-3-methylphenylethylmethacrylate, 2-4-methylphenylethylmethacrylate, 2-(4-propylphenyl)ethylmethacrylate, 2-(4-(1-methylethyl)phenyl)ethylmethacrylate, 2-(4-methoxyphenyl)ethylmethacrylate, 2-(4-cyclohexylphenyl)ethylmethacrylate, 2-(2-chlorophenyl)ethylmethacrylate, 2-(3-chlorophenyl)ethylmethacrylate, 2-(4-chlorophenyl)ethylmethacrylate, 2-(4-bromophenyl)ethylmethacrylate, 2-(3-phenylphenyl)ethylmethacrylate, 2-(4-benzylphenyl)ethylmethacrylate and mixtures thereof.

7. The styrenic thermoplastic resin composition of Claim 1, wherein (b4) the silicon based compound having two or more unsaturated functional groups is a solo or combination of two or more silicon based compounds having two or more unsaturated functional groups in a terminal or side chain, which is a structure represented by Formula 3 as shown below: 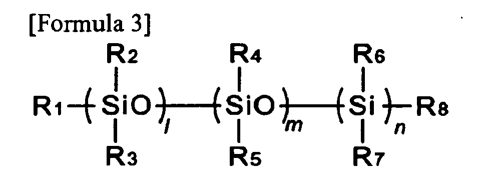 (wherein 1, m and n are an integer from 0~100, 1+m+n is not 0, R₁~R₈ are independently or simultaneously a hydrocarbon group, vinyl group, hydroxyl group, amino group, ureido group, isocyanate group, episulfide group, epoxy group or mercapto group. At least two or more of the R1~R8 include an unsaturated functional group being capable of polymerizing and have a linear or ring-shaped structure (combination of R1 and R8).).

8. The styrenic thermoplastic resin composition of Claim 7, wherein (b4) the silicon based compound having two or more unsaturated functional groups is one selected from the group consisting of dimethoxymethylvinylsilane, diethoxymethylvinylsilane, diacetoxymethylvinylsilane, 1,1,1,3,5,5,5,-heptamethyl-3-vinyltrisiloxane, 2,4,6,8-tetramethyl tetravinylcyclotetrasiloxane, α,ω-divinylpolydimethylsiloxane, modified-vinyl dimethylsiloxane and mixtures thereof.

9. The styrenic thermoplastic resin composition of Claim 1, wherein (b4) the silicon based compound having two or more unsaturated functional groups is a linear or ring-shaped compound containing at least two or more unsaturated functional groups which is polymerizable.

10. The styrenic thermoplastic resin composition of Claim 1, wherein (b4) the silicon based compound having two or more unsaturated functional groups has a viscosity of below 5,000cPs.

11. The styrenic thermoplastic resin composition of Claim 1, wherein the vinyl content of (b4) the silicon based compound having two or more unsaturated functional groups is 0.05 to 10 mmol/g.

12. The styrenic thermoplastic resin composition of any of Claims 1 to 11, wherein the styrenic copolymer resin (a1) is a copolymer or a mixture thereof, which is prepared by copolymerizing 50 to 95% by weight of an aromatic vinyl compound or a mixture thereof and 5 to 50% by weight of a (meth)acrylic acid alkyl ester or a mixture thereof.

13. The styrenic thermoplastic resin composition of any of Claims 1 to 12, wherein the rubber-modified vinyl graft copolymer (a2) is a grafted copolymer prepared by graft-polymerizing 5 to 95% by weight of a vinyl based monomer mixture and 5 to 95% by weight of a rubbery polymer.

14. The styrenic thermoplastic resin composition of any of Claims 1 to 13, wherein the styrenic thermoplastic resin composition has an Izod impact strength (1/8") of 15~60kgf cm/cm measured according to ASTM D256 and a Melt index of 15~60 g/10min measured according to ASTM D1238 (220°C, 10kg).

15. The styrenic thermoplastic resin composition of any of Claims 1 to 14, wherein the styrenic thermoplastic resin composition further includes additives selected from the group consisting of surfactants, nucleating agents, coupling agents, fillers, plasticizers, impact modifiers, lubricants, antimicrobial agents, parting agents, heat stabilizers, antioxidants, light stabilizers, compatibilizers, inorganic fillers, dyes, stabilizers, antistatic agents, pigments, flame proofing agents and mixtures thereof.

16. A plastic article obtainable by extruding or shooting out the styrenic thermoplastic resin composition as in one of claims 1 - 15.

17. An alloyed styrenic thermoplastic resin composition obtainable by alloying the styrenic thermoplastic resin composition as in one of claims 1-15 and one or two more resin compositions selected from the group consisting of polycarbonate(PC), polymethylmethacrylate(PMMA), polyolefin, polyphenyleneether(PPE), polyethyleneterephthalate(PET), polyamide, polyimide and mixtures thereof.

## Patentansprüche

1. Thermoplastische Harzzusammensetzung auf Styrolbasis, umfassend:
(A) 10 bis 99 Gewichts-% eines thermoplastischen Harzes, das (a1) Styrol-Copolymer-Harz und (a2) kautschukmodifiziertes Vinyl-Pfropf-Copolymer einschließt; und
(B) 1 bis 90 Gewichts-% eines verzweigten Styrol-Copolymer-Harzes, hergestellt durch Einschließen einer Verbindung auf Siliciumbasis;
wobei (B) das durch Einschließen einer Verbindung auf Siliciumbasis hergestellte, verzweigte Styrol-Copolymer-Harz ein Copolymer oder eine Kombination davon ist, hergestellt durch Copolymerisieren der folgenden:
(b1) 10 bis 85 Gewichts-% eines aromatischen Monomers auf Vinylbasis;
(b2) 10 bis 85 Gewichts-% eines ungesättigten Monomers auf Nitrilbasis;
(b3) 1 bis 50 Gewichts-% eines (Meth)acrylmonomers; und
(b4) 0,1 bis 20 Gewichts-% einer Verbindung auf Siliciumbasis mit zwei oder mehr ungesättigten funktionellen Gruppen.

2. Thermoplastische Styrol-Harzzusammensetzung nach Anspruch 1, wobei das gewichtsgemittelte Molekulargewicht von dem (B) verzweigten, durch Einschließen einer Verbindung auf Siliciumbasis hergestellten Styrol-Copolymer-Harz 5.000 bis 5.000.000 beträgt.

3. Thermoplastische Styrol-Harzzusammensetzung nach Anspruch 1, wobei das aromatische Monomer (b1) auf Vinylbasis eines ist, ausgewählt aus der Gruppe bestehend aus Styrol, p-Methylstyrol, α-Methylstyrol, Halogen, Alkylsubstituiertes Styrol, Acrylnitril, Methacrylnitril, Maleinsäureanhydrid, C1-4-Alkyl, Phenylkern-substituiertes Maleimid, und Gemischen davon.

4. Thermoplastische Styrol-Harzzusammensetzung nach Anspruch 1, wobei das (b2) ungesättigte Monomer auf Nitrilbasis eines ist, ausgewählt aus der Gruppe bestehend aus Acrylnitril, Methacrylnitril, und Gemischen davon.

5. Thermoplastische Styrol-Harzzusammensetzung nach Anspruch 1, wobei das (b3) (Meth)acryl-Monomer ein aromatisches oder aliphatisches Methacrylat mit einer Struktur, die durch die wie unten gezeigte Formel 1 oder 2 dargestellt ist, und eine Kombination von (Meth)acryl-Monomeren, die copolymerisierbar sind mit einem aromatischen oder aliphatischen Methacrylat mit einer Struktur, die durch die wie unten gezeigte Formel 1 oder 2 dargestellt ist, ist: 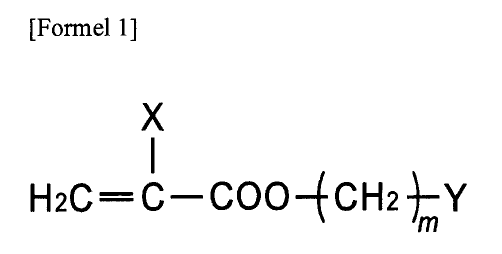 (wobei m eine ganze Zahl von 0~20, X Wasserstoff oder eine Methylgruppe ist, Y eines ist ausgewählt aus der Gruppe bestehend aus einer Methylgruppe, Cyclohexylgruppe, Phenylgruppe, Benzylgruppe, Methylphenylgruppe, Methylethylphenylgruppe, Methoxyphenylgruppe, Cyclohexylphenylgruppe, Chlorphenylgruppe, Bromphenylgruppe, Phenylphenylgruppe, Benzylphenylgruppe), 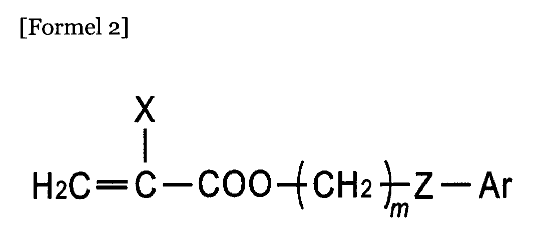 (wobei m eine ganze Zahl von 0~20 ist, X Wasserstoff oder eine Methylgruppe ist, Z Sauerstoff (O) oder Schwefel (S) ist, Ar eines ist ausgewählt aus der Gruppe bestehend aus einer Methylgruppe, Cyclohexylgruppe, Phenylgruppe, Methylphenylgruppe, Methylethylphenylgruppe, Methoxyphenylgruppe, Cyclohexylphenylgruppe, Chlorphenylgruppe, Bromphenylgruppe, Phenylphenylgruppe, Benzylphenylgruppe).

6. Thermoplastische Styrol-Harzzusammensetzung nach Anspruch 5, wobei das aromatische oder aliphatische Methacrylat eines ist, ausgewählt aus der Gruppe bestehend aus Cyclohexyl-(meth)acrylat, Phenoxymethacrylat, Phenoxyethylmethacrylat, 2-Ethylphenoarymethacrylat, 2-Ethylthiophenylmethacrylat, 2-Ethylaminophenylmethacrylat, Phenylmethacrylat, Benzylmethacrylat, 2-Phenylethylmethacrylat, 3-Phenylpropylmethacrylat, 4-Phenylbutylmethacrylat, 2-2-Methylphenylethylmethacrylat, 2-3-Methylphenylethylmethacrylat, 2-4-Methylphenylethylmethacrylat, 2-(4-Propylphenyl)ethylmethacrylat, 2-(4-(1-Methlyethyl)phenyl)ethylmethacryl, 2-(4-Methoxyphenyl)ethylmethacrylat, 2-(4-Cyclohexylphenyl)ethylmethacrylat, 2-(2-Chlorphenyl)ethylmethacrylat, 2-(3-Chlorphenyl)ethlymethacrylat, 2-(4-Chlorphenyl)ethylmethacrylat, 2-(4-Bromphenyl)ethylmethacrylat, 2-(3-Phenylphenyl)ethylmethacrylat, 2-(4-Benzylphenyl)ethylmethacrylat, und Gemischen davon.

7. Thermoplastische Styrol-Harzzusammensetzung nach Anspruch 1, wobei die (b4) Verbindung auf Siliciumbasis mit zwei oder mehr ungesättigten funktionellen Gruppen eine alleinige oder eine Kombination von zwei oder mehr Verbindungen auf Siliciumbasis mit zwei oder mehr ungesättigten funktionellen Gruppen in einer End- oder Seitenkette ist, bei der es sich um eine Struktur handelt, die durch die wie unten gezeigte Formel 3 dargestellt ist: 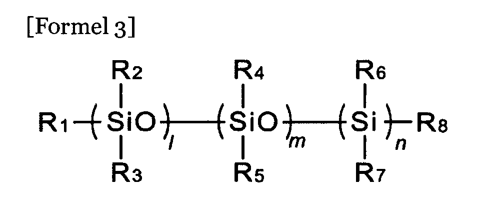 (wobei 1, m und n eine ganze Zahl von 0~100 sind, l+m+n nicht 0 ist, R₁~R₈ unabhängig oder gleichzeitig eine Kohlenwasserstoffgruppe, Vinylgruppe, Hydroxylgruppe, Aminogruppe, Ureidogruppe, Isocyanatgruppe, Episulfidgruppe, Epoxygruppe oder Mercaptogruppe sind, wenigstens zwei oder mehr von der R1~R8 eine ungesättigte funktionelle Gruppe einschließen, die zum Polymerisieren befähigt ist, und eine lineare oder ringförmige Struktur (Kombination von R1 und R8) aufweisen).

8. Thermoplastische Styrol-Harzzusammensetzung nach Anspruch 7, wobei die (b4) Verbindung auf Siliciumbasis mit zwei oder mehr ungesättigten funktionellen Gruppen eine ist, ausgewählt aus der Gruppe bestehend aus Dimethoxymethylvinylsilan, Diethoxymethylvinylsilan, Diacetoxymethylvinylsilan, 1,1,1,3,5,5,5,-Heptamethyl-3-vinyltrisiloxan, 2,4,6,8-Tetramethyltetravinylcyclotetrasiloxan, α,ω-Divinylpolydimethylsiloxan, Vinyl-modifiziertes Dimethylsiloxan bzw. modifiziertes Vinyl-dimethylsiloxan, und Gemischen davon ist.

9. Thermoplastische Styrol-Harzzusammensetzung nach Anspruch 1, wobei die (b4) Verbindung auf Siliciumbasis mit zwei oder mehr ungesättigten funktionellen Gruppen eine lineare oder ringförmige Verbindung ist, die wenigstens zwei oder mehr ungesättigte funktionelle Gruppen enthält, die polymerisierbar ist bzw. sind.

10. Thermoplastische Styrol-Harzzusammensetzung nach Anspruch 1, wobei die (b4) Verbindung auf Siliciumbasis mit zwei oder mehr ungesättigten funktionellen Gruppen eine Viskosität unter 5000 cPs aufweist.

11. Thermoplastische Styrol-Harzzusammensetzung nach Anspruch 1, wobei der Vinylgehalt der (b4) Verbindung auf Siliciumbasis mit zwei oder mehr ungesättigten funktionellen Gruppen 0,05 bis 10 mmol/g beträgt.

12. Thermoplastische Styrol-Harzzusammensetzung nach irgendeinem der Ansprüche 1 bis 11, wobei das Styrol-Copolymerharz (a1) ein Copolymer oder ein Gemisch davon ist, das durch Copolymerisieren von 50 bis 95 Gewichts-% einer aromatischen Vinylverbindung oder eines Gemisches davon und 5 bis 50 Gewichts-% eines (Meth)acrylsäurealkylesters oder eines Gemisches davon hergestellt ist.

13. Thermoplastische Styrol-Harzzusammensetzung nach irgendeinem der Ansprüche 1 bis 12, wobei das kautschukmodifizierte Vinyl-Pfropf-Copolymer (a2) ein gepropftes Copolymer ist, das durch Propfpolymerisieren von 5 bis 95 Gewichts-% eines Monomergemisches auf Vinylbasis und 5 bis 95 Gewichts-% eines Kautschuk-Polymers hergestellt ist.

14. Thermoplastische Styrol-Harzzusammensetzung nach irgendeinem der Ansprüche 1 bis 13, wobei die thermoplastische Styrol-Harzzusammensetzung eine (Kerb-)Schlagzähigkeit (1/8") nach Izod von 15~60kgf·cm/cm bei Messung gemäß ASTM D256 und einen Schmelzindex von 15~60 g/10 min bei Messung gemäß ASTM D1238 (220°C, 10 kg) aufweist.

15. Thermoplastische Styrol-Harzzusammensetzung nach irgendeinem der Ansprüche 1 bis 14, wobei die thermoplastische Styrol-Harzzusammensetzung weiterhin Additive einschließt, die ausgewählt sind aus der Gruppe bestehend aus oberflächenaktiven Mitteln, Nukleierungsmitteln, Kupplungsmitteln, Füllstoffen, Weichmachern, Schlagzähmodifikatoren, Schmier- bzw. Gleitmitteln, antimikrobiellen Mitteln, Trennmitteln, Wärmestabilisatoren, Antioxidationsmitteln, Lichtstabilisatoren, Verträglichkeitsvermittlern, anorganischen Füllstoffen, Farbstoffen, Stabilisatoren, antistatischen Mitteln, Pigmenten, Flammschutzmitteln und Gemischen davon.

16. Kunststoffgegenstand erhältlich durch Extrudieren oder Ausschießen der thermoplastischen Styrol-Harzzusammensetzung nach einem der Ansprüche 1 bis 15.

17. Legierte thermoplastische Styrol-Harzzusammensetzung erhältlich durch Vermischen bzw. Legieren der thermoplastischen Styrol-Harzzusammensetzung nach einem der Ansprüche 1 bis 15, und einer oder zwei mehr Harzzusammensetzungen, ausgewählt aus der Gruppe bestehend aus Polycarbonat (PC), Polymethylmethacrylat (PMMA), Polyolefin, Polyphenylenether (PPE), Polyethylenterephthalat (PET), Polyamid, Polyimid und Gemischen davon.

## Revendications

1. Composition de résine thermoplastique à base de styrène, comprenant :
(A) 10 à 99 % en poids d'une résine thermoplastique comprenant (a1) une résine d'un copolymère styrénique et (a2) un copolymère vinylique greffé modifié par du caoutchouc ; et
(B) 1 à 90 % en poids d'une résine d'un copolymère styrénique ramifié, préparée par incorporation d'un composé à base de silicium ;
dans laquelle (B) la résine d'un copolymère styrénique ramifié, préparée par incorporation d'un composé à base de silicium, est un copolymère, ou une combinaison de ce dernier, préparé par copolymérisation de ce qui suit :
(b1) 10 à 85 % en poids d'un monomère à base vinylaromatique ;
(b2) 10 à 85 % en poids d'un monomère à base de nitrile insaturé ;
(b3) 1 à 50 % en poids d'un monomère (méth)acrylique ; et
(b4) 0,1 à 20 % en poids d'un composé à base de silicium ayant deux groupes fonctionnels insaturés ou plus.

2. Composition de résine thermoplastique styrénique selon la revendication 1, dans laquelle la masse moléculaire moyenne en masse de (B) la résine d'un copolymère styrénique ramifié préparée par incorporation d'un composé à base de silicium, est de 5000 à 5 000 000.

3. Composition de résine thermoplastique styrénique selon la revendication 1, dans laquelle le monomère à base vinylaromatique (b1) est un tel monomère choisi dans le groupe consistant en le styrène, le p-méthylstyrène, l'a-méthylstyrène, les halogènes, les styrènes à substitution alkyle, l'acrylonitrile, le méthacrylonitrile, l'anhydride maléique, les maléimides substitués par un noyau (alkyle en C1-4)-phényle, et les mélanges de ceux-ci.

4. Composition de résine thermoplastique styrénique selon la revendication 1, dans laquelle (b2) le monomère à base de nitrile insaturé est un tel monomère choisi dans le groupe consistant en l'acrylonitrile, le méthacrylonitrile et les mélanges de ceux-ci.

5. Composition de résine thermoplastique styrénique selon la revendication 1, dans laquelle (b3) le monomère (méth)acrylique est un méthacrylate aromatique ou aliphatique ayant une structure représentée par la formule 1 ou 2 telle que présentée ci-dessous ou une combinaison de monomères (méth)acryliques copolymérisables avec un méthacrylate aromatique ou aliphatique ayant une structure représentée par la formule 1 ou 2 telle que présentée ci-dessous : 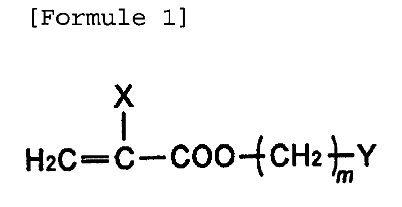 (dans laquelle m est un entier de 0 à 20, X est un atome d'hydrogène ou le groupe méthyle, Y est un radical choisi dans le groupe consistant en le groupe méthyle, le groupe cyclohexyle, le groupe phényle, le groupe benzyle, le groupe méthylphényle, le groupe méthyléthylphényle, le groupe méthoxyphényle, le groupe cyclohexylphényle, le groupe chlorophényle, le groupe bromophényle, le groupe phénylphényle, le groupe benzylphényle), 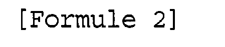 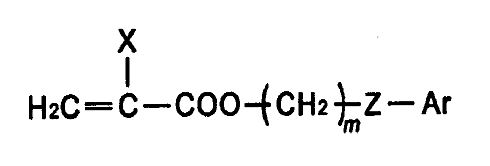 (dans laquelle m est un entier de 0 à 20, X est un atome d'hydrogène ou le groupe méthyle, Z est un atome d'oxygène (O) ou de soufre (S), Ar est un radical choisi dans le groupe consistant en le groupe méthyle, le groupe cyclohexyle, le groupe phényle, le groupe méthylphényle, le groupe méthyléthylphényle, le groupe méthoxyphényle, le groupe cyclohexylphényle, le groupe chlorophényle, le groupe bromophényle, le groupe phénylphényle, le groupe benzylphényle).

6. Composition de résine thermoplastique styrénique selon la revendication 5, dans laquelle le méthacrylate aromatique ou aliphatique est un tel méthacrylate choisi dans le groupe consistant en le (méth)acrylate de cyclohexyle, le phénoxyméthacrylate, le méthacrylate de phénoxyéthyle, le phénoxyméthacrylate de 2-éthyle, le méthacrylate de 2-éthylthiophényle, le méthacrylate de 2-éthylaminophényle, le méthacrylate de phényle, le méthacrylate de benzyle, le méthacrylate de 2-phényléthyle, le méthacrylate de 3-phénylpropyle, le méthacrylate de 4-phénylbutyle, le méthacrylate de 2,2-méthylphényléthyle, le méthacrylate de 2,3-méthylphényléthyle, le méthacrylate de 2,4-méthylphényléthyle, le méthacrylate de 2-(4-propylphényl)éthyle, le méthacrylate de 2-(4-(1-méthyléthyl)phényl)éthyle, le méthacrylate de 2-(4-méthoxyphényl)éthyle, le méthacrylate de 2-(4-cyclohexylphényl)éthyle, le méthacrylate de 2-(2-chlorophényl)éthyle, le méthacrylate de 2-(3-chlorophényl)éthyle, le méthacrylate de 2-(4-chlorophényl)éthyle, le méthacrylate de 2-(4-bromophényl)éthyle, le méthacrylate de 2-(3-phénylphényl)éthyle, le méthacrylate de 2-(4-benzylphényl)éthyle, et les mélanges de ceux-ci.

7. Composition de résine thermoplastique styrénique selon la revendication 1, dans laquelle (b4) le composé à base de silicium ayant deux groupes fonctionnels insaturés ou plus est un seul ou une combinaison de deux ou plus composés à base de silicium ayant deux groupes fonctionnels insaturés ou plus dans une chaîne terminale ou une chaîne latérale, qui est une structure représentée par la formule 3 telle que présentée ci-dessous . 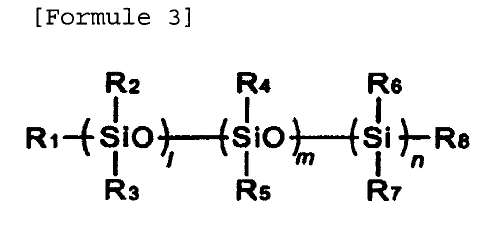 (dans laquelle l, m et n sont des entiers de 0 à 100, l+m+n ne vaut pas 0, R₁ à R₈ représentent chacun indépendamment des autres ou simultanément un groupe hydrocarboné, un groupe vinyle, un groupe hydroxyle, un groupe amino, un groupe uréido, un groupe isocyanate, un groupe épisulfure, un groupe époxy ou un groupe mercapto. Au moins deux des radicaux R1 à R8, ou plus, comprennent un groupe fonctionnel insaturé capable de subir une polymérisation, et ont une structure linéaire ou cyclique (combinaison de R1 et de R8).

8. Composition de résine thermoplastique styrénique selon la revendication 7, dans laquelle (b4) le composé à base de silicium ayant deux groupes fonctionnels insaturés ou plus est un tel composé choisi dans le groupe consistant en le diméthoxyméthylvinylsilane, le diéthoxyméthylvinylsilane, le diacétoxyméthylvinylsilane, le 1,1,1,3,5,5,5-heptaméthyl-3-vinyltrisiloxane, le 2,4,6,8-tétraméthyltétravinylcyclotétrasiloxane, l'α,ω-divinylpolydiméthylsiloxane, le vinyldiméthylsiloxane modifié et les mélanges de ceux-ci.

9. Composition de résine thermoplastique styrénique selon la revendication 1, dans laquelle (b4) le composé à base de silicium ayant deux groupes fonctionnels insaturés ou plus est un composé linéaire ou cyclique contenant au moins deux groupes fonctionnels insaturés ou plus, qui est polymérisable.

10. Composition de résine thermoplastique styrénique selon la revendication 1, dans laquelle (b4) le composé à base de silicium ayant deux groupes fonctionnels insaturés ou plus a une viscosité inférieure à 5000 cP.

11. Composition de résine thermoplastique styrénique selon la revendication 1, dans laquelle la teneur en groupes vinyliques de (b4) le composé à base de silicium ayant deux groupes fonctionnels insaturés ou plus, est de 0,05 à 10 mmol/g.

12. Composition de résine thermoplastique styrénique selon l'une quelconque des revendications 1 à 11, dans laquelle la résine d'un copolymère styrénique (a1) est un copolymère ou un mélange de celui-ci, qui est préparé par copolymérisation de 50 à 95 % en poids d'un composé vinylaromatique ou d'un mélange de celui-ci est de 5 à 50 % en poids d'un ester alkylique de l'acide (méth)acrylique, ou d'un mélange de celui-ci.

13. Composition de résine thermoplastique styrénique selon l'une quelconque des revendications 1 à 12, dans laquelle le copolymère vinylique greffé modifié par du caoutchouc (a2) est un copolymère préparé par polymérisation par greffage de 5 à 95 % en poids d'un mélange de monomères à base vinylique et de 5 à 95 % en poids d'un polymère caoutchouteux.

14. Composition de résine thermoplastique styrénique selon l'une quelconque des revendications 1 à 13, la composition de résine thermoplastique styrénique ayant une résistance au choc Izod (1/8") de 15 à 60 kgf.cm/cm, mesurée selon ASTM D256, et un indice de fluidité de 15 à 60 g/10 min mesuré selon ASTM D1238 (220°C, 10 kg).

15. Composition de résine thermoplastique styrénique selon l'une quelconque des revendications 1 à 14, la composition de résine thermoplastique styrénique comprenant en outre des additifs choisis dans le groupe consistant en les tensioactifs, les agents de nucléation, les agents de couplage, les charges, les plastifiants, des modifiants chocs, les lubrifiants, les agents antimicrobiens, les agents de démoulage, les stabilisants thermiques, les antioxydants, les photo-stabilisants, les agents de compatibilisation, les charges inorganiques, les colorants, les stabilisants, les agents antistatiques, les pigments, les agents d'ignifugation et les mélanges de ceux-ci.

16. Article plastique pouvant être obtenu par extrusion ou injection de la composition de résine thermoplastique styrénique selon l'une quelconque des revendications 1 à 15.

17. Composition de résine thermoplastique styrénique alliée pouvant être obtenue par alliage de la composition de résine thermoplastique styrénique selon l'une des revendications 1 à 15 et d'une ou deux compositions de résine supplémentaires choisies dans le groupe consistant en le polycarbonate (PC), le poly(méthacrylate de méthyle) (PMMA), les polyoléfines, le poly(phénylène éther) (PTE), le poly(téréphtalate d'éthylène) (PET), le polyamide, le polyimide et les mélanges de ceux-ci.
